(19) Europäisches Patentamt
European Patent Office
Office européen des brevets

(11) **EP 3 094 841 B1**

(12) **FASCICULE DE BREVET EUROPEEN**

(45) Date de publication et mention
de la délivrance du brevet:
**05.06.2019 Bulletin 2019/23**

(51) Int Cl.:
***F01P 7/16*** *(2006.01)*

(21) Numéro de dépôt: **15702526.3**

(22) Date de dépôt: **06.01.2015**

(86) Numéro de dépôt international:
**PCT/FR2015/050017**

(87) Numéro de publication internationale:
**WO 2015/107288 (23.07.2015 Gazette 2015/29)**

(54) **DISPOSITIF À THERMOSTAT POUR SYSTÈME DE REFROIDISSEMENT DE VÉHICULE AUTOMOBILE, SYSTÈME DE REFROIDISSEMENT ÉQUIPÉ D'UN TEL DISPOSITIF À THERMOSTAT ET PROCÉDÉ DE COMMANDE D'UN MODULE DE CHAUFFAGE**

THERMOSTATVORRICHTUNG FÜR KRAFTFAHRZEUGKÜHLSYSTEM, KÜHLSYSTEM MIT SOLCH EINER THERMOSTATVORRICHTUNG UND VERFAHREN ZUR STEUERUNG EINES HEIZMODULS

THERMOSTAT DEVICE FOR MOTOR VEHICLE COOLING SYSTEM, COOLING SYSTEM FITTED WITH SUCH A THERMOSTAT DEVICE AND METHOD OF CONTROLLING A HEATING MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2014 FR 1450320**
**15.01.2014 FR 1450323**

(43) Date de publication de la demande:
**23.11.2016 Bulletin 2016/47**

(73) Titulaire: **Renault S.A.S.**
**92100 Boulogne-Billancourt (FR)**

(72) Inventeurs:
• **PIARD, Christophe**
**F-78340 Les Clayes Sous Bois (FR)**

• **ZAOUI, Kamal**
**F-78660 Ablis (FR)**
• **SANTANGELI, Vincent**
**F-91690 Boissy-la-Riviere (FR)**
• **VIEL, Christophe**
**F-11000 Narbonne (FR)**
• **FORTUN, Axel**
**F-91230 Montgeron (FR)**

(56) Documents cités:
WO-A1-2011/089705          DE-A1- 10 223 686
DE-A1- 10 318 355          DE-U1-202010 017 836
FR-A1- 2 456 838          FR-A1- 2 896 272
JP-A- S60 119 319          US-A1- 2002 053 325
US-A1- 2005 006 487

**Description**

DOMAINE TECHNIQUE AUQUEL SE RAPPORTE L'INVENTION

La présente invention concerne de manière générale le refroidissement du moteur d'entrainement dans un véhicule automobile.

Elle concerne plus particulièrement un dispositif à thermostat pour système de refroidissement de véhicule automobile comprenant une vanne, une partie sensible à la chaleur, conçue pour entraîner l'ouverture de la vanne lorsque la température de ladite partie sensible dépasse un seuil de température, et un module de chauffage commandé de ladite partie sensible, ce module de chauffage étant apte à délivrer au maximum une puissance calorifique maximale.

L'invention concerne également un système de refroidissement équipé d'un tel dispositif à thermostat, ainsi qu'un procédé de commande d'un module de chauffage.

ARRIERE-PLAN TECHNOLOGIQUE

Dans les systèmes de refroidissement de moteur d'entrainement de véhicule automobile, on utilise couramment un thermostat qui régule la quantité de liquide de refroidissement froid, délivré par le radiateur, à injecter dans le circuit de refroidissement du moteur afin d'obtenir une température de consigne.

Pour ce faire, le thermostat comprend en général une vanne et une partie sensible à la chaleur (typiquement un volume de cire), conçue pour entraîner l'ouverture de la vanne lorsque la température de la partie sensible dépasse un seuil de température : typiquement, la fusion et la dilatation subséquente de la cire entraîne le déplacement relatif d'une tige (ou crayon) par rapport au corps du thermostat, ce qui commande l'ouverture de la vanne.

Ainsi, lorsque le liquide de refroidissement chauffe et atteint le seuil de température, la vanne s'ouvre mécaniquement de telle sorte que du liquide de refroidissement froid issu du radiateur est injecté dans le circuit de liquide de refroidissement alimentant le moteur, ce qui permet la régulation souhaitée de la température du liquide de refroidissement.

Il a été proposé d'utiliser un module de chauffage commandé de la partie sensible, par exemple une résistance électrique chauffant la cire, afin de pouvoir piloter l'ouverture de la vanne : en mettant la résistance sous tension, on chauffe artificiellement la cire, ce qui permet de forcer l'ouverture de la vanne.

Cette technique est ainsi notamment utilisée lorsque l'on souhaite faire baisser rapidement la température du liquide de refroidissement dans le moteur, ou, de manière générale, lorsque la température recherchée est inférieure à celle obtenue par la régulation mécanique du thermostat. La baisse (par chauffage commandé de la cire) de la température à laquelle la vanne s'ouvre peut en effet s'analyser comme une baisse artificielle de la consigne en température.

L'utilisation du chauffage commandé pour obtenir une ouverture anticipée de la vanne est par exemple décrite dans les demandes de brevet FR2896272 A1, US2005/006487 A1, DE10318355 A1 et FR2456838 A1.

Suite à une telle opération d'ouverture de la vanne par chauffage commandé de la partie sensible, la fermeture de la vanne nécessite un temps non-négligeable du fait du nécessaire refroidissement de la cire. Ce temps de réaction est préjudiciable à une adaptation rapide aux commandes du système. On risque alors d'aboutir à un dépassement important de la consigne du fait de l'injection dans le circuit d'une trop grande quantité de liquide froid.

En outre, le chauffage de la partie sensible à la chaleur, nécessaire à l'ouverture de la vanne, implique toutefois un temps de réaction non-négligeable. Il n'est donc pas possible d'obtenir une ouverture forcée rapide de la vanne.

OBJET DE L'INVENTION

Dans ce contexte, la présente invention propose un dispositif à thermostat selon la revendication 1, comprenant un module de commande conçu pour commander le module de chauffage de manière à limiter la puissance calorifique délivrée par le module de chauffage à une puissance calorifique strictement inférieure à la puissance calorifique maximale et suffisante pour entraîner l'ouverture totale de la vanne.

Le chauffage de la partie sensible à la chaleur (par exemple de la cire) est ainsi limité à une quantité de chaleur qui permet toutefois l'ouverture totale de la vanne. Tout chauffage supplémentaire de la partie sensible à la chaleur n'a aucune utilité, mais est en revanche préjudiciable au temps de réaction du système lorsque l'on recherche ultérieurement la fermeture (même partielle) de la vanne, qui nécessite le refroidissement de la partie sensible à la chaleur.

La puissance calorifique suffisante, à laquelle est limitée la puissance calorifique délivrée par le module de chauffage, est la puissance calorifique minimale suffisante pour entraîner l'ouverture totale de la vanne, telle que déterminée par le module de commande sur la base d'une information de température du liquide de refroidissement au niveau du thermostat, ou au vu d'une information sur la course du thermostat, comme expliqué ci-après. L'effet procuré par l'invention est dans ce cas optimisé.

Selon l'invention, le dispositif permet également d'assurer un chauffage minimum de ladite partie sensible sans toutefois ouvrir la vanne. Ainsi, même lorsque la vanne est fermée, la partie sensible à la chaleur est chauffée, ce qui diminue le temps de réaction lors d'une phase ultérieure où la partie sensible est chauffée pour provoquer l'ouverture de la vanne.

Selon d'autres caractéristiques proposées de manière optionnelle par l'invention :

- la partie sensible est un volume de cire dont la dilatation, au-dessus dudit seuil de température, entraîne un mécanisme conçu pour ouvrir la vanne ;
- le module de chauffage comprend une résistance électrique ;
- le module de commande est conçu pour commander le module de chauffage en fonction d'une température au niveau du thermostat ;
- le dispositif à thermostat comprend un module d'estimation de la température au niveau du thermostat en fonction d'une température mesurée ;
- le dispositif à thermostat comprend un capteur de mesure de la température au niveau du thermostat ;
- le dispositif à thermostat comprend un module de détermination de la proportion d'ouverture de la vanne et le module de commande est conçu pour commander le module de chauffage en fonction de la proportion d'ouverture déterminée ;
- le dispositif à thermostat comprend un module de détermination du débit de la vanne et le module de commande est conçu pour commander le module de chauffage en fonction du débit déterminé.

L'invention propose également un système de refroidissement d'un moteur d'entrainement d'un véhicule automobile selon la revendication 8.

L'invention propose enfin deux procédés de commande du dispositif de la revendication 1, selon les revendications 9 et 10.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'un système de refroidissement d'un moteur à combustion interne ;
- les figures 2a et 2b représente schématiquement un thermostat piloté utilisé dans le système de la figure 1 ;
- la figure 3 représente un premier exemple d'un système de pilotage d'un tel thermostat conforme aux enseignements de l'invention ;
- les figures 4a et 4b présentent des éléments d'un exemple de modèle utilisé pour évaluer la course du thermostat piloté ;
- la figure 5 représente un exemple de module d'évaluation de la course du thermostat piloté ;
- la figure 6 présente les échanges de chaleur impliqués dans le système de refroidissement au niveau du thermostat piloté et du moteur ;
- la figure 7 représente un exemple de module d'évaluation de la température du liquide de refroidissement au niveau du thermostat piloté ;
- la figure 8 représente un second exemple d'un système de pilotage conforme aux enseignements de l'invention ;
- la figure 9 présente un exemple de courbe donnant la tension utile à appliquer pour obtenir l'ouverture totale du thermostat en fonction de la température du liquide dans lequel le thermostat est immergé ;
- la figure 10 présente un exemple de courbe donnant la tension utile à appliquer pour obtenir un préchauffage de la cire du thermostat, sans toutefois provoquer son ouverture, en fonction de la température du liquide dans lequel le thermostat est immergé.

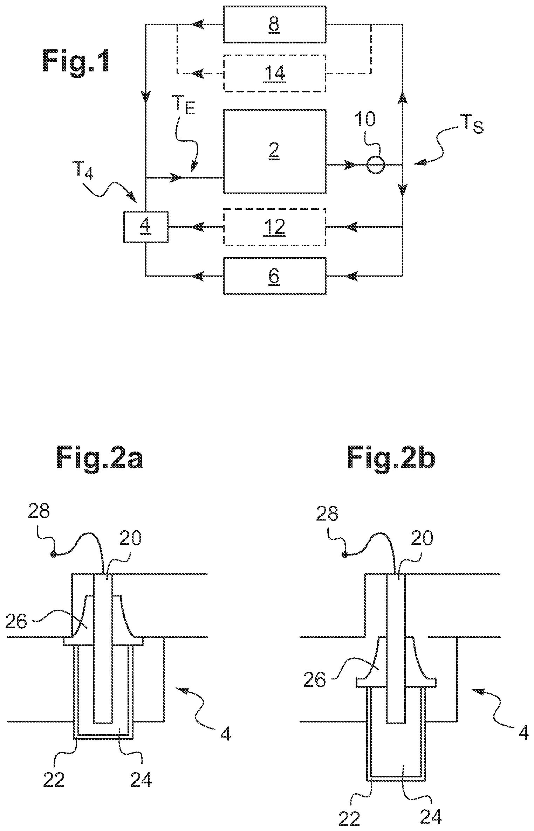

La figure 1 représente les éléments principaux d'un système de refroidissement d'un moteur à combustion interne 2 d'un véhicule automobile. Ce moteur est ici un moteur à allumage par compression (Diesel). En variante, il pourrait s'agir d'un moteur à allumage commandé (Essence).

On a représenté en pointillés sur la figure 1 des éléments qui sont présents conformément à certaines variantes de mise en oeuvre de l'invention.

Le système de refroidissement comprend un radiateur 6, monté par exemple à l'avant du véhicule automobile afin de recevoir le flux d'air généré par le déplacement du véhicule, et un aérotherme 8 qui permet le chauffage de l'habitacle du véhicule.

Le moteur à combustion interne 2 est parcouru par un liquide de refroidissement qui assure son fonctionnement à une température de consigne donnée comme expliqué ci-après.

En sortie du moteur 2, le liquide de refroidissement (chauffé par le moteur 2) est transporté par des conduites jusqu'au thermostat 4 d'une part, jusqu'au radiateur 6 et jusqu'à l'aérotherme 8 d'autres parts. Après refroidissement dans ces éléments, le liquide de refroidissement est transporté par des conduites jusqu'au moteur 2 pour refroidissement de celui-ci.

Le liquide de refroidissement est transporté du moteur 2 (en sortie) au moteur 2 (en entrée) à travers le thermostat 4 de façon permanente de sorte que le thermostat 4 soit toujours en contact avec un flux de liquide de refroidissement quelque soit l'état du thermostat 4 (ouvert ou fermé).

Le système de refroidissement peut éventuellement comprendre en outre un échangeur eau-huile 12 qui reçoit en entrée le liquide de refroidissement issu du moteur 2. Après avoir traversé l'échangeur eau-huile 12, le liquide de refroidissement est réinjecté dans le circuit décrit ci-dessus, par exemple au niveau du thermostat 4. L'utilisation de l'échangeur eau-huile n'entre pas dans le cadre de la présente invention et ne sera donc pas décrit en détail ici.

Le liquide de refroidissement est toutefois transporté du radiateur 6 au moteur 1 à travers une vanne thermostatique ou thermostat 4 qui régule la quantité de liquide de refroidissement refroidi (issue du radiateur 6) à injecter en entrée du moteur 1 afin d'obtenir la température souhaitée de fonctionnement du moteur, comme expliqué ci-après.

De même, le liquide de refroidissement en sortie du moteur 2 peut être utilisé pour réguler la température au sein d'un turbocompresseur 14 alimenté pour ce faire en liquide de refroidissement par une dérivation du circuit liant le moteur 2 et l'aérotherme 8.

Un capteur de température 10 est par ailleurs monté dans les conduites de liquide de refroidissement situées en sortie du moteur 2 afin de mesurer la température $T_S$ du liquide de refroidissement en sortie du moteur 2.

Dans le présent exemple de réalisation, on ne prévoit pas de moyen de mesure de la température du liquide de refroidissement en entrée du moteur 2 (température $T_E$), ou au niveau du thermostat 4 (température $T_4$). En variante, comme expliqué ci-après, on pourrait au contraire prévoir d'utiliser un capteur de température dans le circuit de refroidissement à proximité de l'entrée du moteur afin de mesurer la température $T_E$ ou au niveau du thermostat 4 afin de mesurer la température $T_4$.

Les figures 2a et 2b représentent le thermostat 4 dans deux positions distinctes de fonctionnement, respectivement une première position dans laquelle le thermostat ferme la conduite reliant le radiateur 6 au moteur 2 et une seconde position dans laquelle le thermostat ouvre cette conduite.

Le thermostat 4 comprend une tige (ou "*crayon*") 20 sur laquelle est monté coulissant un ensemble formé d'un corps 22 en laiton et d'une soupape (ou clapet) 26. L'espace laissé libre entre le corps 22 et la tige 20 est rempli d'un matériau sensible à la chaleur, ici de la cire 24 enfermée à étanchéité dans cet espace délimité par le corps 22, la soupape 26 et la tige 20.

Le thermostat 4 est positionné dans la conduite reliant le radiateur 6 au moteur 2 de sorte que son corps 22 baigne dans le liquide de refroidissement de température $T_4$ à cet endroit, comme indiqué ci-dessus ; le corps 22 est donc situé à l'aval de la soupape 26 dans cette conduite.

Lorsque la température $T_4$ du liquide de refroidissement au niveau du thermostat 4 est inférieure à un seuil prédéterminé (défini par la conception du thermostat), et notamment à froid (lorsque le moteur 2 est à l'arrêt), la cire 24 est solide et la soupape 26 occupe la position illustrée en figure 2a dans laquelle elle obstrue la conduite : le liquide de refroidissement issu du radiateur 6 n'est donc pas injecté dans le circuit de refroidissement du moteur 2 et ne participe donc pas à son refroidissement.

Lorsque la température $T_4$ du liquide de refroidissement au niveau du thermostat 4 atteint, voire dépasse, le seuil précité, du fait notamment du chauffage du liquide de refroidissement par le moteur 2 et de l'absence de refroidissement par le liquide de refroidissement issu du radiateur 6, la cire 24 fond et se dilate, ce qui provoque l'augmentation du volume situé entre le corps 22 et la tige 20, de sorte que le corps 22 et la tige 20 sont contraints de s'éloigner, entraînant le déplacement de la soupape 26 et l'ouverture du thermostat 4.

Du liquide de refroidissement issu du radiateur 6 (refroidi par celui-ci) est ainsi injecté dans le circuit de refroidissement du moteur 2 et participe donc au refroidissement du moteur.

On obtient ainsi une régulation mécanique de la température du liquide de refroidissement.

Un ressort de rappel (non représenté) est en général prévu pour faciliter le retour de la soupape 26 vers sa position fermée lorsque la température $T_4$ du liquide de refroidissement diminue et que la cire refroidit et se contracte.

Le thermostat 4 comprend également une résistance électrique (non représentée), installée par exemple à l'intérieur de la tige 20 et connectée électriquement à une électrode 28.

L'application d'une tension V à l'électrode 28 fait passer un courant dans la résistance qui libère de la chaleur par effet Joule et accélère donc la montée en température de la cire 24. Le thermostat 4 s'ouvrira de ce fait plus rapidement qu'en l'absence de chauffage par la résistance, c'est-à-dire pour une température $T_4$ de liquide de refroidissement inférieure au seuil précité.

L'utilisation du chauffage de la cire 24 (ici au moyen de la résistance) permet ainsi d'abaisser artificiellement la température de régulation du liquide de refroidissement du moteur 2 : le thermostat 4 est un thermostat piloté.

L'application continue d'une tension nominale $V_0$ (tension utile maximale) permet d'obtenir la génération par la résistance d'une puissance calorifique maximale (qui dépend de la conception du thermostat). Une puissance calorifique inférieure à la puissance calorifique maximale peut être obtenue en appliquant la tension nominale $V_0$ sur une proportion seulement de la période de temps considérée (principe de la modulation par largeur d'impulsions ou PWM de l'anglais "*Pulse Width Modulation*") : on considère dans la suite que l'on applique dans ce cas une tension utile V inférieure à la tension nominale $V_0$.

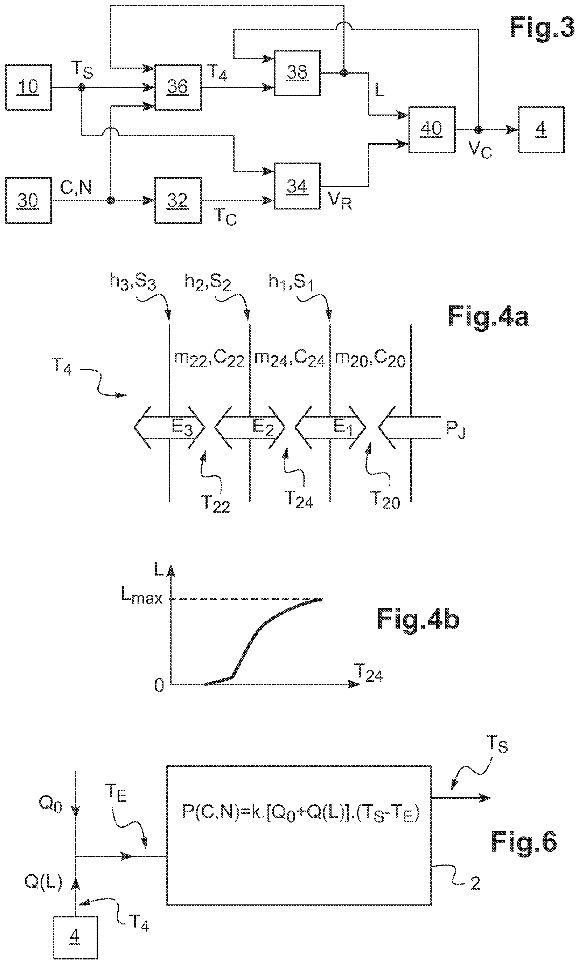

La figure 3 représente un premier exemple d'un système de pilotage du thermostat 4 conforme aux enseignements de l'invention.

Le système de pilotage de la figure 3 comprend plusieurs modules, représentés ici sous forme fonctionnelle. Plusieurs modules fonctionnels peuvent toutefois en pratique être mis en oeuvre par une même unité de traitement programmée pour effectuer les traitements affectés respectivement à ces modules fonctionnels. Cette unité de traitement est par exemple un calculateur 30 de commande du moteur (ou ECU de l'anglais "*Engine Control Unit*") équipant le véhicule, ou une unité de traitement dédiée au pilotage du thermostat 4.

Quoiqu'il en soit de l'architecture physique du système de pilotage du thermostat, une information de charge C (exprimée en N.m) et une information de régime moteur N (exprimée en tr/min), représentatives du fonctionnement du moteur 2, sont disponibles au sein du calculateur 30.

Ces informations C, N sont transmises d'une part à un module 32 de détermination d'une consigne en température $T_C$ et d'autre part à un module 36 d'évaluation de la température $T_4$ du liquide de refroidissement au niveau du thermostat 4.

Le module de détermination de consigne 32 élabore la consigne en température $T_C$ en fonction du régime moteur N et de la charge C sur la base d'une cartographie mémorisée dans l'unité de traitement qui met en oeuvre le module 32. Autrement dit, le module 32 est conçu pour déterminer la consigne en température $T_C$ par lecture d'une valeur associée aux valeurs de régime moteur N et de charge C reçues du calculateur 30 dans une table de correspondance (cartographie) mémorisée dans l'unité de traitement concernée.

Le module de détermination de consigne 32 génère par exemple des consignes $T_C$ comprises entre 90 °C et 110 °C adaptées aux différentes conditions de fonctionnement du moteur 2 rencontrées (représentées par la charge C et le régime-moteur N). En pratique, la consigne $T_C$ peut prendre un ensemble discret de valeurs, par exemple 90 °C, 100 °C ou 110 °C.

La consigne en température $T_C$ générée par le module de détermination de consigne 32 est transmise à un module de régulation 34, qui reçoit également la température $T_S$ du liquide de refroidissement en sortie du moteur mesurée par le capteur de température 10.

Sur la base de la température mesurée $T_S$ et de la consigne en température $T_C$, le module de régulation 34 détermine la tension utile brute $V_R$ à appliquer à l'électrode du thermostat piloté 4 afin de faire converger la température du liquide de refroidissement vers la consigne $T_C$.

La loi de régulation appliquée par le module de régulation 34 pour déterminer la tension utile brute $V_R$ en fonction de la température mesurée $T_S$ et de la température de consigne $T_C$ dépend de l'application envisagée.

Par exemple, on peut envisager ce qui suit dans le cas indiqué ci-dessus où la consigne $T_C$ peut prendre un ensemble discret de valeurs :

- lorsque la consigne $T_C$ est égale à 110 °C (régulation haute température), la tension utile brute $V_R$ est égale à 0 V, c'est-à-dire que la résistance de chauffage de la cire n'est pas utilisée et que la régulation de la température du liquide de refroidissement est réalisée mécaniquement par le thermostat (dont la conception est ici prévue pour une régulation à 110 °C) ;
- lorsque la consigne $T_C$ est strictement inférieure à 110 °C (régulation basse température), et donc égale à 90 °C ou à 100 °C dans le cas décrit ici, la tension utile brute $V_R$ est par exemple déterminée en fonction de l'erreur en température ($T_S$-$T_C$) selon un mécanisme de régulation PI (proportionnel-intégral).

La tension utile brute $V_R$ générée par le module de régulation 34 est transmise à un module de correction 40 dont le fonctionnement sera décrit plus loin.

Le module 36 d'évaluation de la température $T_4$ du liquide de refroidissement au niveau du thermostat 4 reçoit en entrée la température $T_S$ mesurée par le capteur de mesure 10 et une valeur estimée L de course du thermostat 4, ainsi que, comme déjà indiqué, les informations de charge C et de régime moteur N représentatives du fonctionnement du moteur 2.

La valeur estimée L de course du thermostat 4 est produite comme expliqué plus en détail ci-dessous par un module 38 destiné à cet effet.

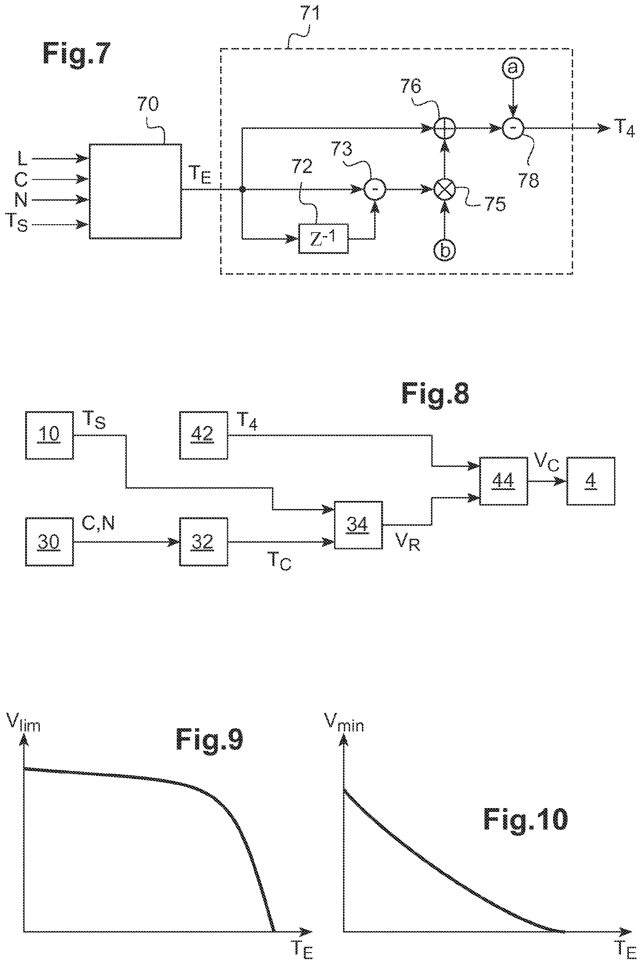

Sur la base de ces informations reçues en entrée, le module 36 évalue la température $T_4$ du liquide de refroidissement au niveau du thermostat 4, par exemple selon le procédé décrit en détail ci-dessous en référence aux figures 6 et 7.

Comme déjà indiqué, selon une variante envisageable, le module 36 pourrait être remplacé par un capteur de température immergé dans le liquide de refroidissement au niveau du thermostat 4.

Le module d'évaluation de course 38 déjà mentionné reçoit en entrée la température $T_4$ du liquide de refroidissement au niveau du thermostat (produite par le module d'évaluation 36 dans l'exemple décrit) et la valeur de tension utile effectivement appliquée au thermostat piloté 4 (valeur utile corrigée $V_C$ générée par le module de correction 40 comme expliqué ci-après).

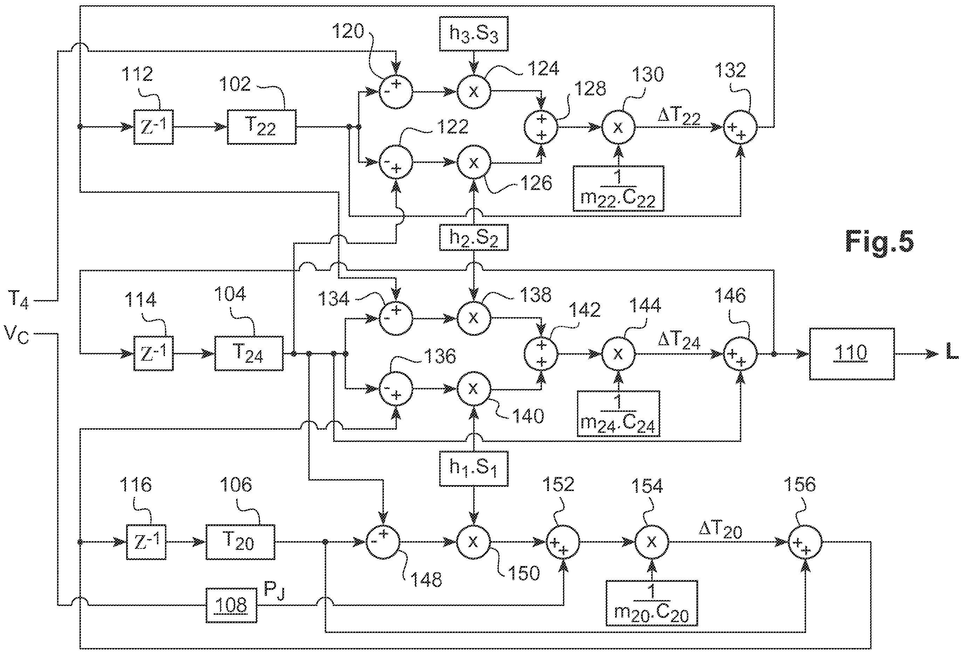

Sur la base de ces informations reçues en entrée, le module 38 évalue la course L de déplacement relatif de la tige 20 et du corps 22, ce qui donne une estimation de la proportion d'ouverture du thermostat 4. L'évaluation effectuée par le module 38 est par exemple réalisée par la mise en oeuvre d'un modèle numérique, comme décrit ci-dessous en référence aux figures 4a, 4b et 5. En variante, cette évaluation peut être réalisée par lecture de la course L associée, dans une table de correspondance préenregistrée, aux valeurs de température $T_4$ et de tension utile appliquée $V_C$ reçues en entrée. Les valeurs préenregistrées ont par exemple dans ce cas été déterminées à l'aide d'essais préalables ou de simulations, réalisées au préalable, à l'aide du modèle numérique décrit en référence aux figures 4a, 4b et 5.

Le module 38 peut ainsi fournir une valeur L représentative de la course du thermostat 4 au module de correction 40, qui reçoit également en entrée la tension utile brute $V_R$ calculée par le module de régulation 34 comme déjà indiqué.

Lorsque la tension utile brute $V_R$ calculée par le module de régulation 34 est faible, voire nulle, le module de correction 40 corrige cette valeur de sorte qu'une tension utile minimale soit effectivement appliquée à l'électrode 28 du thermostat piloté 4 afin que la résistance délivre une puissance calorifique non-nulle, ce qui permet d'effectuer une préchauffe de la cire 24 à une température limite d'ouverture du thermostat 4. Ainsi, tout chauffage supplémentaire de la cire 24 (en réponse à une commande du système de pilotage en vue d'ouvrir le thermostat) aura un effet immédiat d'ouverture de la vanne.

En pratique, grâce à la connaissance de la valeur estimée L de course du thermostat 4 (reçue du module 38), le module de correction 40 peut déterminer quelle proportion d'ouverture du thermostat 4 est produite par la valeur de tension utile effectivement appliquée. Si le module de correction 40 constate la fermeture du thermostat 4 (c'est-à-dire si L=0), il génère en sortie une valeur de tension utile corrigée $V_C$ légèrement supérieure à celle précédemment appliquée, jusqu'à constater une légère ouverture du thermostat 4 (toujours à l'aide de la valeur estimée L de course).

Naturellement, ce mécanisme d'application d'une tension minimum de préchauffage n'est maintenu que tant que la tension utile brute $V_R$ générée par le module de régulation 34 est inférieure à cette tension minimum de préchauffage. En effet, dès lors que le module de régulation 34 commande une tension utile brute $V_R$ supérieure à la tension minimum de préchauffage, cette tension utile brute $V_R$ est appliquée telle quelle par le module de correction 30 à l'électrode 28 du thermostat piloté 4 (on a dans ce cas $V_C = V_R$).

Le module de correction 40 provoque également une limitation de la tension utile appliquée $V_C$ (et donc de la puissance calorifique délivrée par la résistance par effet Joule) de telle sorte que l'application de cette tension $V_C$ ne provoque pas un chauffage supérieur à celui entraînant une ouverture totale du thermostat 4 (c'est-à-dire une course L égale à la course maximale $L_{max}$). Un chauffage supplémentaire est en effet inutile ; il est en outre préjudiciable au temps de réaction du système lorsque l'on souhaite ensuite fermer le thermostat (puisque le chauffage supplémentaire de la cire 24 rend plus long son refroidissement, puis éventuellement sa solidification).

En pratique, lorsque la valeur L de la course du thermostat 4 reçue par le module de correction 40 atteint la course maximale $L_{max}$, le module de correction 40 applique au thermostat piloté 4 une tension utile $V_C$ qui ne dépend pas de la tension utile brute $V_R$ reçue du module de régulation 34, mais qui est choisie pour maintenir la course L à sa valeur maximale $L_{max}$. On utilise par exemple pour ce faire un asservissement de la tension utile appliquée $V_C$ de telle sorte que la course évaluée L se maintienne entre une valeur prédéterminée (ici $0,95.L_{max}$) et la course maximale $L_{max}$. Il s'agit donc dans ce cas d'une commande en boucle fermée.

Naturellement, ce mécanisme de limitation de la tension appliquée (et donc de la puissance calorifique délivrée par la résistance) n'est maintenu que tant que la tension utile brute $V_R$ générée par le module de régulation 34 est supérieure à cette tension limitée. En effet, dès lors que le module de régulation 34 commande une tension utile brute $V_R$ inférieure à la tension limitée déterminée par l'asservissement décrit ci-dessus, cette tension utile brute $V_R$ est appliquée telle quelle par le module de correction 30 à l'électrode 28 du thermostat piloté 4 (on a dans ce cas $V_C = V_R$).

On peut prévoir également, en complément de la limitation ci-dessus, que le module de correction 40 provoque une limitation de la tension effectivement appliquée $V_C$ en fonction de la course L reçue en entrée pour une plage de valeurs de cette course L.

En effet, pour certains types de thermostats pilotés, il est contre-indiqué de commander une puissance de chauffage importante dans certaines positions d'ouverture du thermostat car le chauffage risque alors d'endommager les joints qui assurent l'étanchéité entre la tige et l'ensemble corps-soupape.

L'unité de traitement qui met en oeuvre le module de correction 40 mémorise pour ce faire une table de correspondance qui indique la tension utile maximum autorisée $V_{max}$ en fonction de la course L du thermostat. Ces données sont par exemple fournies par le fabriquant du thermostat.

Le module de correction 40 lit donc à chaque instant la tension utile maximum autorisée $V_{max}$ dans la table en fonction de la valeur L de course reçue du module d'évaluation 38 et détermine ainsi la tension utile corrigée à appliquer :

- si $V_R$ est inférieur à $V_{max}$, $V_C = V_R$ ;
- si $V_R$ est supérieur (ou égal) à $V_{max}$, $V_c = V_{max}$.

Pour la simplification de l'exposé, on ne tient pas compte dans le paragraphe qui précède la limitation additionnelle éventuelle de la tension utile appliquée en vue d'éviter un échauffement trop important de la cire, comme proposé ci-dessus.

On comprend qu'en dehors des situations décrites ci-dessus, le module de correction 40 applique au thermostat piloté 4 une tension utile $V_C$ égale à la tension utile brute $V_R$ reçue en entrée en provenance du module de régulation 34.

On remarque qu'en pratique, l'application d'une tension utile donnée au thermostat 4 est réalisée en appliquant une tension nominale $V_0$ pendant une proportion du temps total telle que l'on génère une puissance électrique égale à celle qu'on aurait obtenue par application continue de la tension utile recherchée (conformément au principe de module en largeur d'impulsion ou PWM de l'anglais "*Pulse Width Modulation*"), comme déjà expliqué plus haut.

La figure 4a présente le modèle utilisé dans l'exemple décrit ici pour simuler le comportement thermique des différentes parties du thermostat piloté 4 en vue d'évaluer sa course comme expliqué plus loin.

Dans ce modèle, chaque partie du thermostat piloté 4 est représenté par sa masse, sa capacité thermique massique et sa température (que l'on considère uniforme sur l'ensemble de la partie concernée) ; on définit ainsi :

- la masse $m_{22}$, la capacité thermique massique $C_{22}$ et la température $T_{22}$ du corps 22 ;
- la masse $m_{24}$, la capacité thermique massique $C_{24}$ et la température $T_{24}$ de la cire 24 ;
- la masse $m_{20}$, la capacité thermique massique $C_{20}$ et la température $T_{20}$ de la tige 20.

On considère par ailleurs que ces différents éléments, ainsi que le liquide de refroidissement, sont séparés par des interfaces caractérisées chacune par un coefficient de transfert thermique surfacique et une surface, ce qui permet de définir :

- un coefficient de transfert $h_1$ et une surface $S_1$ pour l'interface entre la tige 20 et la cire 24 ;
- un coefficient de transfert $h_2$ et une surface $S_2$ pour l'interface entre la cire 24 et le corps 22 ;
- un coefficient de transfert $h_3$ et une surface $S_3$ pour l'interface entre le corps 22 et le liquide de refroidissement à la température $T_4$.

Les échanges calorifiques sont donc modélisés comme suit :

- la résistance chauffe la tige par effet Joule en lui apportant une puissance thermique $P_J$ (directement liée à la tension utile $V_C$ appliquée au thermostat piloté 4) ;
- un échange de chaleur a lieu entre la tige 20 et la cire 24 de puissance $E_1 = h_1.S_1.(T_{20}-T_{24})$ (comptée positivement pour un transfert de chaleur de la tige 20 vers la cire 24) ;
- un échange de chaleur a lieu entre la cire 24 et le corps 22 de puissance $E_2 = h_2.S_2.(T_{24}-T_{22})$ (comptée positivement pour un transfert de chaleur de la cire 24 vers le corps 22) ;
- un échange de chaleur a lieu entre le corps 22 et le liquide de refroidissement de puissance $E_3 = h_3.S_3.(T_{22}-T_4)$ (comptée positivement pour un transfert de chaleur du corps 22 vers le liquide de refroidissement).

En faisant un bilan de chaleur pour chaque partie du thermostat, on obtient les équations suivantes qui lient les températures $T_{20}$, $T_{22}$, $T_{24}$ des différentes parties et la variation $\Delta T_{20}$, $\Delta T_{22}$, $\Delta T_{24}$ de chacune de ces températures dans le temps (par seconde lorsque les puissances ci-dessus sont exprimées en W) :

$$m_{20}.C_{20}.\Delta T_{20} = P_J - E_1 = P_J + h_1.S_1.(T_{24}-T_{20})$$

$$m_{24}.C_{24}.\Delta T_{24} = E_1 - E_2 = h_1.S_1.(T_{20}-T_{24}) + h_2.S_2.(T_{22}-T_{24})$$

$$m_{22}.C_{22}.\Delta T_{22} = E_2 - E_3 = h_2.S_2.(T_{24}-T_{22}) + h_3.S_3.(T_4-T_{22}).$$

Grâce à ces équations, et sur la base d'évaluations ou de mesures de la température $T_4$ du liquide de refroi-

dissement au niveau du thermostat 4 et de la tension utile $V_C$ appliquée au thermostat 4 (qui donne directement la puissance $P_J$ dissipée par la résistance placée dans le thermostat 4), il est possible de déterminer à chaque instant l'évolution des températures des différentes parties du thermostat. Pour l'initialisation du système, on peut considérer qu'au démarrage (la résistance étant inactive dans les instants précédents), la température est homogène dans le thermostat 4 et vaut la température du liquide de refroidissement : on choisit les valeurs initiales de $T_{20}$, $T_{22}$, $T_{24}$ comme égales à celle $T_4$ du liquide de refroidissement.

On connaît donc en particulier la température $T_{24}$ de la cire 24 qui permet d'obtenir directement la valeur L de course du thermostat, par exemple au moyen d'une table de correspondance qui indique la relation entre ces deux grandeurs, comme illustré par exemple en figure 4b. Ces données (relation entre la température $T_{24}$ de la cire et la course L du thermostat) sont par exemple déterminées par des essais préalables ; elles peuvent être fournies par le fabriquant du thermostat.

De même, lorsque les caractéristiques des différentes parties du thermostat (masse, capacité calorifique) et des interfaces (surface, coefficient de transfert) ne sont pas connues, il est possible de les déterminer par des essais préalables ou à l'aide de courbes expérimentales de fonctionnement du thermostat : on adapte les caractéristiques des différentes parties et des interfaces de sorte que des résultats ou des courbes équivalents, déterminés grâce au modèle, correspondent aux résultats d'essais ou aux courbes expérimentales. (On remarque qu'il suffit dans ce cas de déterminer les produits $m_{20}.C_{20}$, $m_{22}.C_{22}$, $m_{24}.C_{24}$ et $h_1.S_1$, $h_2.S_2$, $h_3.S_3$, et non chaque caractéristique séparément.)

La figure 5 représente un exemple de module 38 d'évaluation de la course du thermostat piloté qui utilise le modèle qui vient d'être décrit. Ce module est par exemple mis en oeuvre au sein d'une unité de traitement qui mémorise notamment la table de correspondance reliant les valeurs de température de cire $T_{24}$ et de course L du thermostat.

Le module 38 reçoit en entrée la température $T_4$ du liquide de refroidissement au niveau du thermostat 4 (évaluée par un module dédié, telle que le module 36 visible en figure 3 et décrit ci-dessous en référence à la figure 7, ou mesurée par un capteur de température) et la valeur de tension utile $V_C$ appliquée au thermostat 4.

Le module 38 comprend une unité 102 de mémorisation de la valeur instantanée d'évaluation de la température $T_{22}$ du corps 22, une unité 104 de mémorisation de la valeur instantanée d'évaluation de la température $T_{24}$ de la cire 24 et une unité 106 de mémorisation de la valeur instantanée d'évaluation de la température $T_{20}$ de la tige 20. Comme indiqué ci-dessus, au début du processus d'évaluation, ces unités sont initialisées avec la valeur $T_4$ de température du liquide de refroidissement reçue en entrée.

Chaque itération du processus débute par une estimation des nouvelles valeurs $T_{20}$ et $T_{22}$ de température respectivement de la tige 20 et du corps 22. On procède ainsi car ces éléments sont proches des sources de chaleur et leur température est susceptible d'évoluer depuis la précédente itération.

Pour ce faire, le module 38 détermine l'évolution $\Delta T_{20}$ de la température $T_{20}$ de la tige 20 au cours d'une itération sur la base des valeurs instantanées $T_{20}$, $T_{24}$ de température et de tension utile $V_C$ (reçue en entrée) comme suit.

Un soustracteur 148 reçoit la valeur instantanée $T_{20}$ de l'unité 106 et la soustrait à la valeur instantanée $T_{24}$ reçue de l'unité 104. La valeur générée par le soustracteur 148 est multipliée par $h_1.S_1$ au sein d'un multiplicateur 150. On somme ensuite, au moyen d'un additionneur 152, la valeur obtenue en sortie du multiplicateur 150 et la puissance $P_J$ générée par la résistance, déterminée en fonction de la tension utile $V_C$ appliquée à la résistance au moyen d'une unité de conversion 108.

La sortie de l'additionneur 152 est multipliée par $1/(m_{20}.C_{20})$ au sein d'un multiplicateur 154 afin d'obtenir l'évolution $\Delta T_{20}$ recherchée (conformément à la formule donnée ci-dessus).

La sortie du multiplicateur 154 (évolution $\Delta T_{20}$) est ajoutée à la valeur instantanée $T_{20}$ par un additionneur 156, ce qui permet d'obtenir en sortie de l'additionneur 156 la nouvelle valeur instantanée d'évaluation de la température $T_{20}$ de la tige 20, qui sera utilisée par l'unité 106 à l'itération suivante (après passage dans ce but à travers un retardateur 116).

De même, le module 38 détermine l'évolution $\Delta T_{22}$ de la température $T_{22}$ du corps 22 au cours d'une itération sur la base des valeurs instantanées $T_4$ (reçue en entrée), $T_{22}$, $T_{24}$ de température comme suit.

Un soustracteur 120 reçoit la valeur instantanée $T_{22}$ de l'unité 102 et la soustrait à la valeur instantanée $T_4$ reçue en entrée ; de même, un soustracteur 122 reçoit la valeur instantanée $T_{22}$ de l'unité 102 et la soustrait à la valeur instantanée $T_{24}$ reçue de l'unité 104. Les valeurs générées par les soustracteurs 120, 122 sont respectivement multipliées par $h_3.S_3$ au sein d'un multiplicateur 124 et par $h_2.S_2$ au sein d'un multiplicateur 126, puis sommées par un additionneur 128. La sortie de l'additionneur 128 est multipliée par $1/(m_{22}.C_{22})$ au sein d'un multiplicateur 130 afin d'obtenir l'évolution $\Delta T_{22}$ recherchée (conformément à la formule donnée ci-dessus).

La sortie du multiplicateur 130 (évolution $\Delta T_{22}$) est ajoutée à la valeur instantanée $T_{22}$ par un additionneur 132, ce qui permet d'obtenir en sortie de l'additionneur 132 la nouvelle valeur instantanée d'évaluation de la température $T_{22}$ du corps 22, qui sera utilisée par l'unité 102 à l'itération suivante (après passage dans ce but à travers un retardateur 112).

Le module 38 détermine l'évolution $\Delta T_{24}$ de la température $T_{24}$ de la cire 24 au cours d'une itération (ici d'une durée d'une seconde) sur la base des valeurs instantanées $T_{20}$, $T_{22}$, $T_{24}$ de température comme suit. Ici, les températures $T_{20}$ et $T_{22}$ utilisées sont celles qui viennent d'être calculées comme décrit ci-dessus.

Un soustracteur 134 reçoit la valeur instantanée $T_{24}$ de l'unité 104 et la soustrait à la valeur instantanée $T_{22}$

(telle qu'elle vient d'être calculée) reçue de l'additionneur 132 ; de même, un soustracteur 136 reçoit la valeur instantanée $T_{24}$ de l'unité 104 et la soustrait à la valeur instantanée $T_{20}$ (telle qu'elle vient d'être calculée) reçue de l'additionneur 156. Les valeurs générées par les soustracteurs 134, 136 sont respectivement multipliées par $h_2.S_2$ au sein d'un multiplicateur 138 et par $h_1.S_1$ au sein d'un multiplicateur 140, puis sommées par un additionneur 142. La sortie de l'additionneur 142 est multipliée par $1/(m_{24}.C_{24})$ au sein d'un multiplicateur 144 afin d'obtenir l'évolution $\Delta T_{24}$ recherchée (conformément à la formule donnée ci-dessus).

La sortie du multiplicateur 144 (évolution $\Delta T_{24}$) est ajoutée à la valeur instantanée $T_{24}$ par un additionneur 146, ce qui permet d'obtenir en sortie de l'additionneur 146 la nouvelle valeur instantanée d'évaluation de la température $T_{24}$ de la cire 24, qui sera utilisée par l'unité 104 à l'itération suivante (après passage dans ce but à travers un retardateur 114).

La nouvelle valeur instantanée d'évaluation de la température T24 est également transmise en entrée d'une unité 110 de conversion de la valeur de température de cire en valeur de course L du thermostat, sur la base de la table de correspondance mentionnée plus haut reliant les valeurs de température de cire et de course du thermostat.

On obtient ainsi à chaque itération une estimation de la valeur de course L du thermostat 4.

La figure 6 montre les échanges de chaleur impliqués dans le système de refroidissement au niveau du thermostat piloté et du moteur.

Comme visible en figure 1, le débit de liquide de refroidissement qui entre dans le moteur 2 et le parcourt en vue d'assurer son refroidissement est la somme du débit $Q_0$ en sortie de l'aérotherme (et éventuellement du turbocompresseur) et du débit $Q(L)$ en sortie du thermostat, lequel dépend de la course L du thermostat.

Le réchauffement de ce flux de liquide de refroidissement dans le moteur, du fait de la puissance calorifique $P(C,N)$ cédée par le moteur, génère l'accroissement de la température du liquide de refroidissement de sa valeur $T_E$ en entrée à sa valeur $T_S$ en sortie, ce qui est traduit par l'équation suivante :
$P(C,N) = k.[Q_0+Q(L)].(T_S-T_E)$, où k est une constante caractéristique du liquide de refroidissement ($k = \rho.C_P$ où est p la masse volumique du liquide de refroidissement et Cp sa capacité thermique massique, ou chaleur massique).

On remarque que, comme indiqué par son expression sous la forme $P(C,N)$, la puissance calorifique cédée par le moteur dépend de son point de fonctionnement, défini par la charge C et le régime N.

On propose d'utiliser ces considérations pour évaluer la température du liquide de refroidissement $T_E$ en entrée du moteur, puis la température du liquide de refroidissement $T_4$ au niveau du thermostat piloté 4 au moyen du module d'évaluation 36 déjà mentionné, par exemple comme décrit à présent.

La figure 7 représente ainsi un exemple de module d'évaluation de la température $T_4$ du liquide de refroidissement au niveau du thermostat piloté.

Ce module d'évaluation reçoit en entrée une information L représentative de la course du thermostat 4 (déterminée ici au moyen du module d'évaluation 38, dont un exemple a été décrit en référence aux figures 4a, 4b et 5), des informations relatives au point de fonctionnement du moteur, ici la charge C et le régime moteur N (fournies par exemple par l'unité de gestion du moteur ou ECU), et la température $T_S$ du liquide de refroidissement en sortie du moteur, ici mesurée par le capteur de température 10.

L'unité de traitement qui met en oeuvre le module de la figure 7 mémorise une cartographie de la puissance $P(C,N)$ cédée au liquide de refroidissement par le moteur en fonction de la charge C et du régime-moteur N. Cette cartographie est une table qui indique les valeurs de puissance P cédée au liquide de refroidissement par le moteur respectivement associées à des couples de valeurs C, N.

Cette unité de traitement mémorise également une pluralité de valeurs $Q(L)$ de débit de liquide de refroidissement à travers le thermostat associées respectivement aux différentes valeurs possibles pour la course L.

Ainsi, sur la base des informations reçues comme indiqué ci-dessus, un sous-module 70 détermine à chaque instant, par lecture dans la mémoire de l'unité de traitement, le débit $Q(L)$ associé à la valeur L de course reçue en entrée et la puissance $P(C,N)$ associée aux valeurs de charge C et de régime moteur N reçues en entrée.

Le sous-module 70 évalue ainsi, à chaque instant t, la température $T_E(t)$ du liquide de refroidissement en entrée du moteur à l'aide du modèle décrit ci-dessus en référence à la figure 6 : $T_E(t) = T_S - P(C,N)/(k.[Q_0+Q(L)])$.

L'information de température $T_E(t)$ déterminée par le sous-module 70 est appliquée à un retardateur 72, à un soustracteur 73 (qui reçoit également la sortie du retardateur 72) et à un additionneur 76. L'additionneur reçoit également la sortie du soustracteur 73 après multiplication dans un multiplicateur 75 par une constante b.

La sortie de l'additionneur 76 est appliquée à un soustracteur 78 d'une constante a, qui génère ainsi en sortie une valeur estimée de la température $T_4$ du liquide de refroidissement au niveau du thermostat 4 qui vaut à chaque instant :

$$T_4 = T_E(t) - a + b.[T_E(t) - T_E(t-1)].$$

L'agencement des éléments 72, 73, 75, 76, 78 qui vient d'être décrit forme ainsi un sous-module 71 qui détermine la valeur estimée de la température $T_4$ du liquide de refroidissement au niveau du thermostat 4 sur la base de la valeur estimée de la température $T_E$ du liquide de refroidissement en entrée du moteur 2.

Dans ce sous-module 71, la correction apportée à la température $T_E(t)$ par les termes a et b.[$T_E(t) - T_E(t-1)$] permet de tenir compte du fait que le thermostat se situe légèrement en amont de l'entrée du moteur dans le circuit de liquide de refroidissement et du fait que la température en entrée du moteur résulte de la combinaison de liquide de refroidissement provenant du thermostat et de liquide de refroidissement provenant de l'aérotherme.

Les constantes a et b sont déterminées par des essais préalables et peuvent être mémorisées dans l'unité de traitement qui met en oeuvre le module de la figure 7. Dans le mode de réalisation décrit ici, on a par exemple a = 4 et b = 15 (pour des températures exprimées en °C ou en K).

On peut prévoir selon une variante envisageable que les paramètres a et b soient variables en fonction de la puissance thermique prélevée par l'aérotherme à l'eau. Lors des essais préalables, on détermine dans ce cas les paramètres a et b pour diverses puissances de chauffage de l'habitacle du véhicule. Lors du fonctionnement, les valeurs a et b sont alors déterminées à chaque instant en fonction de la puissance du chauffage (telle qu'indiquée par une information dédiée reçue par exemple du module de gestion du chauffage de l'habitacle).

Dans la description ci-dessus, le calcul de l'évaluation de la température $T_4$ du liquide de refroidissement au niveau du thermostat en fonction de l'évaluation de la température $T_E$ du liquide de refroidissement en entrée du moteur est présentée sous forme de modules fonctionnels effectuant les différentes opérations. En pratique, ces opérations peuvent être effectuées par l'exécution d'un programme par l'unité de traitement qui met en oeuvre le module de la figure 7.

La figure 8 représente un second exemple d'un système de pilotage conforme aux enseignements de l'invention. Sur cette figure, on a conservé la numérotation des modules identiques à ceux présents dans le premier exemple décrit ci-dessus en référence à la figure 3.

Comme pour la figure 3, le système de pilotage de la figure 8 comprend plusieurs modules représentés sous forme fonctionnelle. Plusieurs modules fonctionnels peuvent toutefois en pratique être mis en oeuvre par une même unité de traitement programmée pour effectuer les traitements affectés respectivement à ces modules fonctionnels.

Le calculateur de gestion du moteur 30 délivre une information de charge C (exprimée en N.m) et une information de régime moteur N (exprimée en tr/min), représentatives du fonctionnement du moteur 2. Ces informations C, N sont transmises au module 32 de détermination d'une consigne en température $T_C$.

Comme dans le premier exemple décrit en référence à la figure 3, le module de détermination de consigne 32 élabore la consigne en température $T_C$ en fonction du régime moteur N et de la charge C par lecture dans une table de correspondance (cartographie).

La consigne en température $T_C$ générée par le module de détermination de consigne 32 est transmise au module de régulation 34, qui reçoit également la température $T_S$ du liquide de refroidissement en sortie du moteur mesurée par le capteur de température 10.

Sur la base de la température mesurée $T_S$ et de la consigne en température $T_C$, le module de régulation 34 détermine la tension utile brute $V_R$ à appliquer à l'électrode du thermostat piloté 4 afin de faire converger la température du liquide de refroidissement vers la consigne $T_C$. On pourra se référer aux explications fournies ci-dessus dans le cadre de la figure 3 pour plus de détails sur le module de régulation 34.

Un module de correction 44, dont le fonctionnement est décrit ci-dessous, reçoit en entrée la tension utile brute $V_R$ générée par le module de régulation 34 et la température $T_4$ du liquide du refroidissement au niveau du thermostat 4, mesurée par exemple par un capteur de température 42 immergée dans le liquide de refroidissement à proximité du thermostat 4.

En variante, la température $T_4$ du liquide de refroidissement au niveau du thermostat 4 pourrait être évaluée par un module d'évaluation comme le module d'évaluation 36 de la figure 3, éventuellement sur la base d'une évaluation de la course du thermostat comme celle fournie par le module d'évaluation 38 de la figure 3.

L'unité de traitement qui met en oeuvre le module de correction 44 mémorise :

- une première table de correspondance qui indique la tension utile $V_{lim}$ à appliquer pour obtenir l'ouverture totale du thermostat en fonction de la température $T_4$ du liquide dans lequel le thermostat est immergé, par exemple selon la courbe représentée à la figure 9 ;
- une seconde table de correspondance qui indique la tension utile $V_{min}$ à appliquer pour obtenir un préchauffage de la cire du thermostat, sans toutefois provoquer son ouverture, en fonction de la température $T_4$ du liquide dans lequel le thermostat est immergé, par exemple selon la courbe représentée en figure 10.

Les valeurs mémorisées sont déterminées au préalable, par exemple au moyen d'essais ; elles peuvent notamment être fournies par le fabriquant du thermostat.

Le module de correction 44 lit à chaque instant la valeur $V_{lim}$ associée dans la première table de correspondance à la température $T_4$ reçue du capteur 42 et la valeur $V_{min}$ associée dans la seconde table de correspondance à cette même température $T_4$.

Le module de correction 44 détermine alors la tension utile $V_C$ à appliquer au thermostat en corrigeant la tension utile brute $V_R$ de manière à limiter la tension utile appliquée au thermostat à la valeur $V_{lim}$ et à appliquer au minimum une tension utile $V_{min}$.

Précisément, le module de correction 44 détermine comme suit la tension utile $V_C$ à appliquer au thermostat 4 :

- si $V_R > V_{lim}$, $V_C = V_{lim}$ ;
- si $V_R < V_{min}$, $V_C = V_{min}$ ;
- dans les autres cas, $V_C = V_R$.

Ainsi, lorsque le module de correction 44 ne modifie pas la valeur de tension utile (cas où $V_C = V_R$), le chauffage du thermostat piloté aura tendance à ouvrir celui-ci de sorte que la température $T_S$ converge vers la température de consigne $T_C$, conformément au mécanisme de régulation mis en oeuvre module de régulation 34.

En revanche, lorsque ce mécanisme commande (par le biais de la valeur $V_R$ générée par le module de régulation 34) un chauffage de la cire au-delà de ce qui est nécessaire pour ouvrir totalement le thermostat 4 (conformément à ce qu'indique la première table de correspondance), le module de correction 44 limite la tension utile (et donc la puissance calorifique délivrée par la résistance) à celle qui permet cette ouverture totale.

Un chauffage plus important de la cire n'aurait en effet aucun intérêt mais serait au contraire préjudiciable au temps de réaction du système lorsque le mécanisme de régulation souhaitera ultérieurement commander la fermeture (éventuellement partielle) du thermostat.

De même, lorsque le mécanisme de régulation ne commande (par le biais de la valeur $V_R$ générée par le module de régulation 34) aucun chauffage de la cire ($V_R=0$), ou commande un chauffage faible, de sorte qu'un chauffage ultérieur serait nécessaire pour amener la cire à la température à laquelle elle génère un début d'ouverture du thermostat 4, le module de correction 44 permet d'appliquer au thermostat 4 une tension utile de préchauffage (conformément à ce qu'indique la seconde table de correspondance) ; la puissance calorifique délivrée par la résistance du fait de cette tension de préchauffage permet de chauffer la cire à la température à laquelle tout apport ultérieur de chaleur provoquera l'ouverture immédiate du thermostat.

Le temps de réaction du système en cas de commande d'ouverture du thermostat (par exemple en raison d'un changement de consigne) est donc réduit.

Dans ce mode de réalisation, la valeur limite $V_{lim}$ et la valeur de préchauffe $V_{min}$ sont déterminées sur la seule base de la température $T_4$ reçue en entrée : il s'agit donc d'un système de commande en boucle ouverte.

## Revendications

1. Dispositif à thermostat (4) pour système de refroidissement d'un moteur (2) de véhicule automobile comprenant une vanne (26), une partie (24) sensible à la chaleur, conçue pour entraîner l'ouverture de la vanne (26) lorsque la température de ladite partie sensible (24) dépasse un seuil de température, et un module de chauffage commandé de ladite partie sensible, le module de chauffage comprenant une résistance électrique connectée à une électrode (28) et étant apte à délivrer au maximum une puissance calorifique maximale, **caractérisé en ce qu'**il comprend un module de régulation (34) conçu pour déterminer une tension utile brute ($V_R$) à appliquer à l'électrode du thermostat piloté (4) sur la base d'une température mesurée ($T_S$) du liquide de refroidissement en sortie du moteur (2) et d'une consigne en température ($T_C$) du liquide de refroidissement en fonction du régime moteur (N) et de la charge (C), et un module de correction (40) conçu pour commander le module de chauffage :

   - dans une position ouverte de la vanne (26) de manière à limiter la puissance calorifique délivrée par le module de chauffage à une puissance calorifique strictement inférieure à la puissance calorifique maximale et juste suffisante pour entraîner l'ouverture totale de la vanne (26) de telle sorte que l'application de cette puissance calorifique ne provoque pas un chauffage supérieur à celui entraînant une ouverture totale de la vanne (26), et
   - dans une position fermée de la vanne (26) de manière à ce qu'il délivre une puissance calorifique non-nulle juste insuffisante pour entraîner une ouverture de la vanne (26) de telle sorte que tout chauffage supplémentaire aura un effet d'ouverture de la vanne (26).

2. Dispositif à thermostat (4) selon la revendication 1, dans lequel la partie sensible est un volume de cire (24) dont la dilatation, au-dessus dudit seuil de température, entraîne un mécanisme conçu pour ouvrir la vanne (26).

3. Dispositif à thermostat (4) selon la revendication 1 ou 2, dans lequel le module de commande (44) est conçu pour commander le module de chauffage en fonction d'une température ($T_4$) au niveau du thermostat.

4. Dispositif à thermostat (4) selon la revendication 3, comprenant un module (36) d'estimation de la température ($T_4$)

au niveau du thermostat (4) en fonction d'une température mesurée ($T_S$).

5.  Dispositif à thermostat (4) selon la revendication 3, comprenant un capteur (42) de mesure de la température au niveau du thermostat (4).

6.  Dispositif à thermostat (4) selon la revendication 1 ou 2, comprenant un module (38) de détermination de la proportion (L) d'ouverture de la vanne (26), dans lequel le module de commande (40) est conçu pour commander le module de chauffage en fonction de la proportion d'ouverture (L) déterminée.

7.  Dispositif à thermostat (4) selon la revendication 1 ou 2, comprenant un module de détermination du débit de la vanne (26), dans lequel le module de commande est conçu pour commander le module de chauffage en fonction du débit déterminé.

8.  Système de refroidissement d'un moteur (2) d'entrainement d'un véhicule automobile, comprenant un radiateur (6) et un dispositif à thermostat (4) conçu pour réguler la quantité de liquide de refroidissement issue du radiateur (6) à injecter dans un circuit de refroidissement du moteur (2), le dispositif à thermostat étant conforme à l'une des revendications 1 à 7.

9.  Procédé de commande d'un module de chauffage commandé d'une partie sensible à la chaleur d'un dispositif à thermostat (4) pour système de refroidissement de véhicule automobile selon l'une des revendications 1 à 7, le dispositif à thermostat comprenant une vanne (26) et la partie (24) sensible à la chaleur étant conçue pour entraîner l'ouverture de la vanne (26) lorsque la température de ladite partie sensible (24) dépasse un seuil de température, le module de chauffage étant apte à délivrer au maximum une puissance calorifique maximale, **caractérisé par** une étape de limitation de la puissance calorifique délivrée par le module de chauffage à une puissance calorifique strictement inférieure à la puissance calorifique maximale et juste suffisante pour entraîner l'ouverture totale de la vanne (26).

10. Procédé de commande d'un module de chauffage commandé d'une partie sensible à la chaleur d'un dispositif à thermostat (4) pour système de refroidissement de véhicule automobile selon l'une des revendications 1 à 7, le dispositif à thermostat comprenant une vanne (26) et la partie (24) sensible à la chaleur étant conçue pour entraîner l'ouverture de la vanne (26) lorsque la température de ladite partie sensible (24) dépasse un seuil de température, le procédé comprenant une étape de commande du module de chauffage de manière à ce qu'il délivre une puissance calorifique non-nulle juste insuffisante pour entraîner une ouverture de la vanne (26).

## Patentansprüche

1.  Vorrichtung mit Thermostat (4) für Kühlsystem eines Kraftfahrzeugmotors (2), die einen Schieber (26), einen wärmeempfindlichen Teil (24), der konzipiert ist, um das Öffnen des Schiebers (26) anzutreiben, wenn die Temperatur des empfindlichen Teils (24) einen Temperaturschwellenwert überschreitet, und ein gesteuertes Modul zum Heizen des empfindlichen Teils umfasst, wobei das Heizmodul einen elektrischen Widerstand umfasst, der mit einer Elektrode (28) verbunden ist, die geeignet ist, um höchstens eine maximale Wärmeleistung zu liefern, **dadurch gekennzeichnet, dass** sie ein Reguliermodul (34) umfasst, das konzipiert ist, um eine Rohnutzspannung ($V_R$) zu bestimmen, die an die Elektrode des gesteuerten Thermostats (4), auf der Basis einer gemessenen Temperatur ($T_S$) der Kühlflüssigkeit am Ausgang des Motors (2) und einem Temperatursollwert ($T_C$) der Kühlflüssigkeit in Abhängigkeit von der Motordrehzahl (N) und der Last (C) anzutreiben ist, zu bestimmen, und ein Korrekturmodul (40), das konzipiert ist, um das Heizmodul zu steuern:

    - in eine offene Position des Schiebers (26) derart, dass die Wärmeleistung, die von dem Heizmodul geliefert wird, auf eine Wärmeleistung beschränkt wird, die strikt kleiner ist als die maximale Wärmeleistung, und gerade ausreichend, um das vollständige Öffnen des Schiebers (26) derart anzutreiben, dass das Anlegen dieser Wärmeleistung kein Heizen höher als das verursacht, das ein vollständiges Öffnen des Schiebers (26) antreibt, und
    - in eine geschlossene Position des Schiebers (26) derart, dass es eine Wärmeleistung nicht gleich null liefert, die gerade unzureichend ist, um ein Öffnen des Schiebers (26) anzutreiben, so dass jedes zusätzliche Heizen eine Wirkung des Öffnens des Schiebers (26) hat.

2.  Vorrichtung mit Thermostat (4) nach Anspruch 1, wobei der empfindliche Teil ein Wachsvolumen (24) ist, dessen Dehnung über den Temperaturschwellenwert einen Mechanismus antreibt, der konzipiert ist, um den Schieber (26) zu öffnen.

3. Vorrichtung mit Thermostat (4) nach Anspruch 1 oder 2, wobei das Steuermodul (44) konzipiert ist, um das Heizmodul in Abhängigkeit von einer Temperatur ($T_4$) im Bereich des Thermostats zu steuern.

4. Vorrichtung mit Thermostat (4) nach Anspruch 3, die ein Modul (36) zum Schätzen der Temperatur ($T_4$) im Bereich des Thermostats (4) in Abhängigkeit von einer gemessenen Temperatur ($T_S$) umfasst.

5. Vorrichtung mit Thermostat (4) nach Anspruch 3, die einen Messfühler (42) der Temperatur im Bereich des Thermostats (4) umfasst.

6. Vorrichtung mit Thermostat (4) nach Anspruch 1 oder 2, die ein Modul (38) zum Bestimmen des Anteils (L) des Öffnens des Schiebers (26) umfasst, wobei das Steuermodul (40) konzipiert ist, um das Heizmodul in Abhängigkeit von dem festgelegten Öffnungsanteil (L) zu steuern.

7. Vorrichtung mit Thermostat (4) nach Anspruch 1 oder 2, die ein Modul zum Bestimmen des Durchsatzes des Schiebers (26) umfasst, wobei das Steuermodul konzipiert ist, um das Heizmodul in Abhängigkeit von dem festgelegten Durchsatz zu steuern.

8. Kühlsystem eines Motors (2) zum Antreiben eines Kraftfahrzeugs, das einen Kühler (6) und eine Vorrichtung mit Thermostat (4) umfasst, die konzipiert ist, um die Menge an Kühlmittel zu regulieren, die aus dem Kühler (6) stammt, die in einen Kühlkreislauf des Motors (2) einzuspritzen ist, wobei die Vorrichtung mit Thermostat einem der Ansprüche 1 bis 7 entspricht.

9. Steuerverfahren eines gesteuerten Heizmoduls eines wärmeempfindlichen Teils einer Vorrichtung mit Thermostat (4) für Kraftfahrzeugkühlsystem nach einem der Ansprüche 1 bis 7, wobei die Vorrichtung mit Thermostat einen Schieber (26) umfasst, und der wärmeempfindliche Teil (24) konzipiert ist, um das Öffnen des Schiebers (26) anzutreiben, wenn die Temperatur des empfindlichen Teils (24) einen Temperaturschwellenwert überschreitet, wobei das Heizmodul geeignet ist, um höchstens eine maximale Wärmeleistung zu liefern, **gekennzeichnet durch** einen Schritt des Einschränkens der Wärmeleistung, die von dem Heizmodul geliefert wird, auf eine Wärmeleistung, die strikt kleiner ist als die maximale Wärmeleistung und gerade ausreichend, um das vollständige Öffnen des Schiebers (26) zu bewirken.

10. Steuerverfahren eines gesteuerten Heizmoduls eines wärmeempfindlichen Teils einer Vorrichtung mit Thermostat (4) für Kraftfahrzeugkühlsystem nach einem der Ansprüche 1 bis 7, wobei die Vorrichtung mit Thermostat einen Schieber (26) umfasst, und der wärmeempfindliche Teil (24) konzipiert ist, um das Öffnen des Schiebers (26) anzutreiben, wenn die Temperatur des empfindlichen Teils (24) eine Schwellentemperatur überschreitet, wobei das Verfahren einen Schritt des Steuerns des Heizmoduls derart umfasst, dass es eine Wärmeleistung nicht gleich null liefert, die gerade unzureichend ist, um ein Öffnen des Schiebers (26) zu bewirken.

## Claims

1. Thermostat device (4) for a motor vehicle engine (2) cooling system comprising a valve (26), a heat-sensitive part (24), designed to drive the opening of the valve (26) when the temperature of said sensitive part (24) exceeds a temperature threshold, and a controlled heating module of said sensitive part, the heating module comprising an electrical resistor connected to an electrode (28) and_being suitable for delivering at the maximum a maximum heat output, **characterized in that** it comprises a regulation module (34) designed to determine a rough useful voltage ($V_R$) to be applied to the electrode of the driven thermostat (4) on the basis of a measured temperature ($T_S$) of the coolant at the output of the engine (2) and of a temperature setpoint ($T_C$) of the coolant as a function of the engine speed (N) and of the load (C), and a correction module (40) designed to control the heating module:

   - in an open position of the valve (26) so as to limit the heat output delivered by the heating module to a heat output strictly less than the maximum heat output and just sufficient to drive the total opening of the valve (26) such that the application of this heat output does not provoke a heating greater than that leading to a total opening of the valve (26), and
   - in a closed position of the valve (26) in such a way that it delivers a non-zero heat output that is just insufficient to drive an opening of the valve (26) such that any additional heating will have a valve (26) opening effect.

2. Thermostat device (4) according to Claim 1, in which the sensitive part is a volume of wax (24), the expansion of which, above said temperature threshold, drives a mechanism designed to open the valve (26).

3. Thermostat device (4) according to Claim 1 or 2, in which the control module (44) is designed to control the heating module as a function of a temperature ($T_4$) on thermostat.

4. Thermostat device (4) according to Claim 3, comprising a module (36) for estimating the temperature ($T_4$) on thermostat (4) as a function of a measured temperature ($T_S$).

5. Thermostat device (4) according to Claim 3, comprising a sensor (42) for measuring the temperature on thermostat (4).

6. Thermostat device (4) according to Claim 1 or 2, comprising a module (38) for determining the proportion (L) of opening of the valve (26), wherein the control module (40) is designed to control the heating module as a function of the determined proportion of opening (L).

7. Thermostat device (4) according to claim 1 or 2, comprising a module for determining the flow rate of the valve (26), in which the control module is designed to control the heating module as a function of the determined flow rate.

8. System for cooling an engine (2) driving a motor vehicle, comprising a radiator (6) and a thermostat device (4) designed to regulate the quantity of coolant from the radiator (6) to be injected into a cooling circuit of the engine (2), thermostat device conforming to one of Claims 1 to 7.

9. Method for controlling a controlled heating module of a heat-sensitive part of a thermostat device (4) for a motor vehicle cooling system according to one of Claims 1 to 7, thermostat device comprising a valve (26) and the heat-sensitive part (24) being designed to drive the opening of the valve (26) when the temperature of said sensitive part (24) exceeds a temperature threshold, the heating module being suitable for delivering at the maximum a maximum heat output, **characterized by** a step of limitation of the heat output delivered by the heating module to a heat output strictly less than the maximum heat output and just sufficient to drive the total opening of the valve (26).

10. Method for controlling a controlled heating module of a heat-sensitive part of a thermostat device (4) for a motor vehicle cooling system according to one of Claims 1 to 7, thermostat device comprising a valve (26) and the heat-sensitive part (24) being designed to drive the opening of the valve (26) when the temperature of said sensitive part (24) exceeds a temperature threshold, the method comprising a step of control of the heating module in such a way that it delivers a non-zero heat output that is just insufficient to drive an opening of the valve (26).

**Fig.1**

**Fig.2a**

**Fig.2b**

Fig.3

Fig.4a

Fig.4b

$$P(C,N)=k.[Q_0+Q(L)].(T_S-T_E)$$

Fig.6

Fig.5

**Fig.7**

**Fig.8**

**Fig.9**

**Fig.10**

**EP 3 094 841 B1**

## RÉFÉRENCES CITÉES DANS LA DESCRIPTION

**Documents brevets cités dans la description**

- FR 2896272 A1
- US 2005006487 A1
- DE 10318355 A1
- FR 2456838 A1